# EUROPEAN PATENT SPECIFICATION

(11) **EP 1 699 100 B1**
(45) Date of publication and mention of the grant of the patent: **11.09.2013**
(21) Application number: 04807729.1
(22) Date of filing: 24.12.2004
(51) Int. Cl.: H01M 8/04, H01M 8/10, H01M 8/24

(54) **Cooling of a solid polymer electrolyte fuel cell stack**
Kühlung eines Festpolymerelektrolyt-Brennstoffzellenstapels
Refroidissement d'un empilement de piles à combustible à électrolyte polymère solide

(30) Priority: 24.12.2003 JP 2003427774
(43) Date of publication of application: 06.09.2006
(73) Proprietor: HONDA MOTOR CO., LTD., Tokyo 107-8556 (JP)
(72) Inventor: OKAZAKI, Koji, K.K. HONDA GIJUTSU KENKYUSHO, Wako-shi, Saitama 3510193 (JP)
(74) Representative: Piésold, Alexander James
(86) International application number: PCT/JP2004/019372
(87) International publication number: WO 2005/062409

(56) References cited:
- JP-A- 5 283 091
- JP-A- 6 275 298
- JP-A- 7 235 318
- JP-A- 11 354 142
- JP-A- 60 044 966
- JP-A- 61 198 571
- JP-A- 62 066 581
- JP-A- 2002 134 138
- JP-A- 2002 190 313
- JP-A- 2002 313 383
- JP-A- 2003 346 834
- US-A- 5 344 721
- US-A- 6 106 972
- US-B1- 6 309 774

## Description

### TECHNICAL FIELD

The present invention relates to a method of cooling a stack formed by stacking a plurality of unit power generation cells each including a solid polymer electrolyte, and a polymer electrolyte fuel cell including the stack.

### BACKGROUND ART

A polymer electrolyte fuel cell has an electrolyte electrode assembly including an anode electrode, a cathode electrode, and an electrolyte interposed between the anode electrode and the cathode electrode. For example, the electrolyte is a solid polymer electrolyte membrane such as a perfluorosulfonic acid polymer membrane. The electrolyte electrode assembly is sandwiched between a pair of separators to form a unit power generation cell. A plurality of unit power generation cells are stacked together to form a stack. Current collecting plates are provided at ends of the stack. One of the current collecting plates is electrically connected to the respective anode electrodes of the unit power generation cells, and the other of the current collecting plates is electrically connected to the respective cathode electrodes of the unit power generation cells.

Typically, the stack includes metal cooling plates in addition to the unit power generation cells. The cooling plates are interposed between the unit power generation cells. One cooling plate is present for every stack of two or three unit power generation cells. The cooling plate may be provided in each space between the adjacent unit power generation cells.

The cooling plate has a coolant flow field for a coolant. During operation of the polymer electrolyte fuel cell, the coolant flows through the coolant flow field by a coolant supply/discharge system connected to the stack. Thus, the operating temperature of the stack is maintained in the range of 80°C to 90°C. The electrons produced in the respective unit power generation cells are collected from the current collecting plates, and used as the electrical energy for energizing an external load connected to the fuel cell.

In the case where the coolant flows inside the stack as described above, if the coolant is water or the like having electrical conductivity, the electrical current may flow through the coolant. Under the circumstances, the electrical current flows to the coolant supply/discharge system. As a result, electrical leakage to the ground or liquid occurs, and the output of the polymer electrolyte fuel cell is lowered.

Firstly, in an attempt to address the problem, it may be contemplated to apply insulating coating to the coolant flow field for the coolant. However, the opening area of the coolant flow field is small, and the coolant flow field includes curved portions. Therefore, it is difficult to provide the insulating coating.

Next, as disclosed in Patent Document 1, it may be contemplated to use an insulating organic solvent.
Patent Document 1: Japanese Laid-Open Patent Publication No. 5-283091

### DISCLOSURE OF INVENTION

### PROBLEMS TO BE SOLVED BY THE INVENTION

Typically, as described above, the cooling plate is made of metal, and pipes of the coolant supply/discharge system, a heat exchanger or the like are also made of metal. For this reason, as described in Patent Document 1, even if an insulating organic solvent is used as the coolant, metal particles adhered to the cooling plate, pipes, the heat exchanger, etc. are mixed into the insulating organic solvent, and thus electrical current may flow through the metal particles. As a result, electrical leakage to the ground or liquid occurs, and the output of the polymer electrolyte fuel cell is lowered.

Also, in the polymer electrolyte fuel cell of this type, since the stack needs to be connected to the coolant supply/discharge system, a large space for providing the polymer electrolyte fuel cell is required.

It is known from JP 06 275298 or JP 62 066581 to provide a fuel cell stack immersed in a liquid coolant contained in a housing. In operation, the coolant is vaporised by the fuel cells and condenses elsewhere in the housing. It is known from JP 60 044966 to provide a fuel cell stack in a container which also contains a liquid coolant and a condenser. The coolant is supplied from the bottom of the container to the fuel cell stack by a pump.

A general object of the present invention is to provide a method of cooling a stack in which it is possible to avoid electrical leakage to the liquid or ground.

A main object of the present invention is to provide a polymer electrolyte fuel cell with a small space for providing the polymer electrolyte fuel cell.

According to the present invention there is provided a polymer electrolyte fuel cell including a stack formed by stacking a plurality of unit power generation cells, said unit power generation cells each including an electrolyte electrode assembly and a first separator and a second separator sandwiching said electrolyte electrode assembly, said electrolyte electrode assembly including an anode electrode, a cathode electrode, and a solid polymer electrolyte interposed between said anode electrode and said cathode electrode, characterised in that said polymer electrolyte fuel cell further comprises: a stack container case containing said stack; and a condenser provided in said stack container case, wherein said stack is immersed in an electrically insulating liquid coolant inside said stack container case to cool said stack; wherein said condenser condenses the liquid coolant which has been vaporized at said stack container case by cooling said stack; and wherein a plurality of vertically extending plate members for damming the liquid coolant inside the stack container case are provided on an inner wall surface of said stack container case, said plate members protruding towards side surfaces of said stack and being exposed above the liquid surface of the liquid coolant.

Since the stack is cooled by immersing the stack in the coolant, it is not necessary that the coolant flows through the stack. Thus, no coolant flow field needs to be provided in the stack, and no insulating coating for the coolant flow field is required.

Further, by using the insulating liquid as the coolant, electrical conduction to the coolant, and electrical leakage to the liquid or ground are prevented, so that reduction in the power generation performance of the polymer electrolyte fuel cell due to immersing of the stack is not caused.

It is preferable that the liquid coolant is boiled into vapor in the nucleate boiling state. If boiling occurs in the film boiling state, the stack is covered by a vapor film, and the contact area between the stack and the liquid coolant is reduced. As a result, the efficiency of cooling the stack may be lowered undesirably. In order to ensure that the nucleate boiling state is induced, it is preferable that a liquid having a boiling temperature lower than the operating temperature of the stack by 10°C to 25°C is used as the liquid coolant.

It is preferable that the liquid coolant is supplied into the stack. Thus, since the inner part of the stack is also cooled, further improvement in the efficiency of cooling the stack is achieved.

In the structure of the invention, it is not necessary that the coolant flows through the stack. Thus, no coolant flow field needs to be provided in the stack, and no pipes for supplying and discharging the coolant need to be connected to the stack. Accordingly, the structure of the polymer electrolyte fuel cell is simplified significantly. As a result, reduction in the size and the weight of the polymer electrolyte fuel cell is achieved. Therefore, the space needed for providing the polymer electrolyte fuel cell is reduced.

Further, since the insulating liquid is used as the coolant, electrical leakage to the liquid or ground is prevented.

It is preferable that coating is applied to at least one of a surface of the condenser and an inner surface of the stack container case. In the structure, even if the condenser or the stack container case is made of metal, the metal particles from the condenser or the stack container case are not mixed into the liquid coolant, and the liquid coolant is maintained insulating. For example, it is preferable that the coating comprises fluorine resin.

It is preferable that the stack includes a cooling plate having at least one groove for allowing the liquid coolant to flow into the stack. In the structure, the inner part of the stack is cooled. Therefore, improvement in the efficiency of cooling the stack is achieved.

In the structure of the invention, in the case where the polymer electrolyte fuel cell is mounted in a vehicle, even if the vehicle body is tilted, the liquid coolant is dammed by the protrusions. Thus, the stack is not exposed from the liquid coolant, and the efficiency of cooling the stack is not lowered.

Further, it is preferable that a trapping section for trapping the condensed liquid coolant at the condenser, and a circulation mechanism for allowing the liquid coolant to flow from the trapping section back to the stack container case are provided. By the operation of the circulation mechanism, the condensed liquid coolant returns to the stack container case efficiently.

In the present invention, the stack is immersed in the insulating liquid coolant. Therefore, no coolant flow field for the coolant needs to be provided in the stack. Thus, no pipes for supply/discharge of the coolant need to be connected to the stack. In the structure, reduction in the size and the weight of the polymer electrolyte fuel cell is achieved. As a result, the space needed for providing the polymer electrolyte fuel cell is reduced. Further, by immersing, the polymer electrolyte fuel cell is cooled efficiently, and by using an insulating liquid coolant, electrical leakage to the liquid or ground is prevented.

### BRIEF DESCRIPTION OF DRAWINGS

FIG. 1 is an overall perspective view schematically showing a polymer electrolyte fuel cell according to an embodiment of the present invention.
FIG. 2 is an overall perspective view schematically showing a stack of the polymer electrolyte fuel cell in FIG. 1.
FIG. 3 is a horizontal cross sectional view showing the stack in FIG. 2.
FIG. 4 is a plan view with cutaway showing the polymer electrolyte fuel cell in FIG. 1.
FIG. 5 is a cross sectional view taken along a line V-V in FIG. 4.
FIG. 6 is a cross sectional view taken along a line VI-VI in FIG. 4.

### BEST MODE FOR CARRYING OUT THE INVENTION

Hereinafter, a method of cooling a stack according to a preferred embodiment of the present invention, which is associated with a polymer electrolyte fuel cell, will be described with reference to the accompanying drawings.

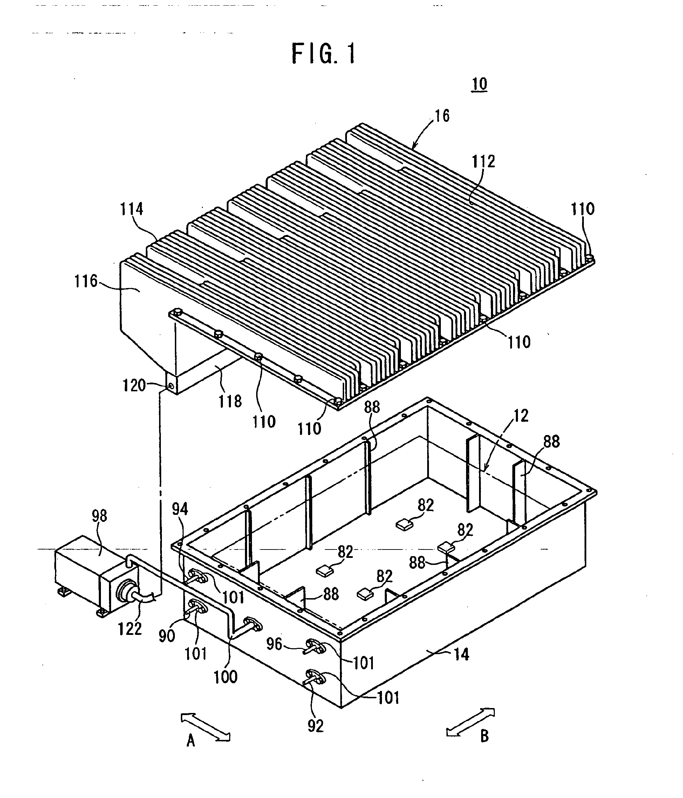

FIG. 1 is an overall perspective view schematically showing a polymer electrolyte fuel cell according to the embodiment of the present invention. The polymer electrolyte fuel cell 10 includes a stack 12, a metallic stack container case 14 containing the stack 12, and a condenser 16. The condenser 16 is provided in an opening of the stack container case 14 at an upper position.

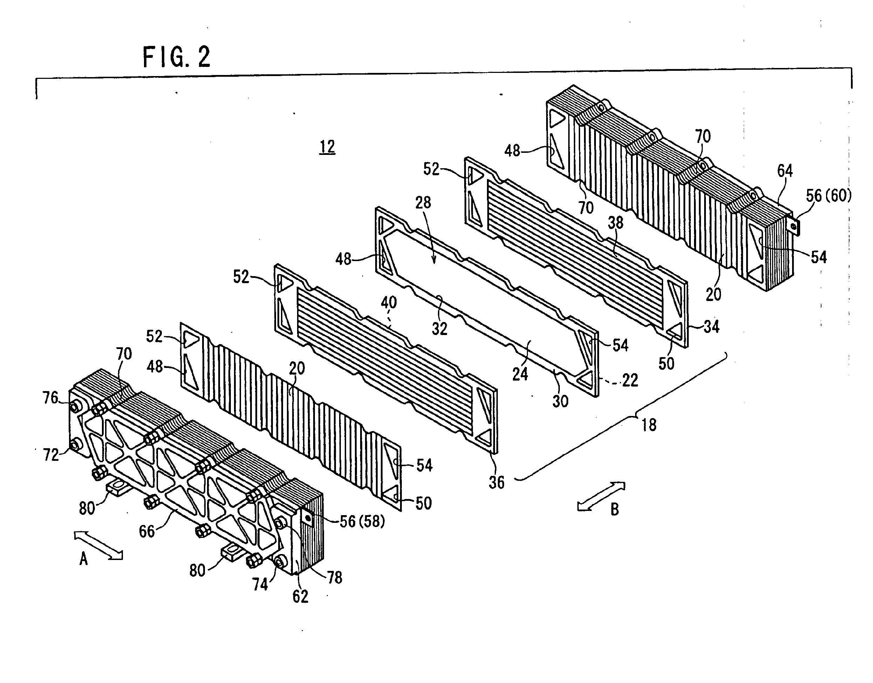

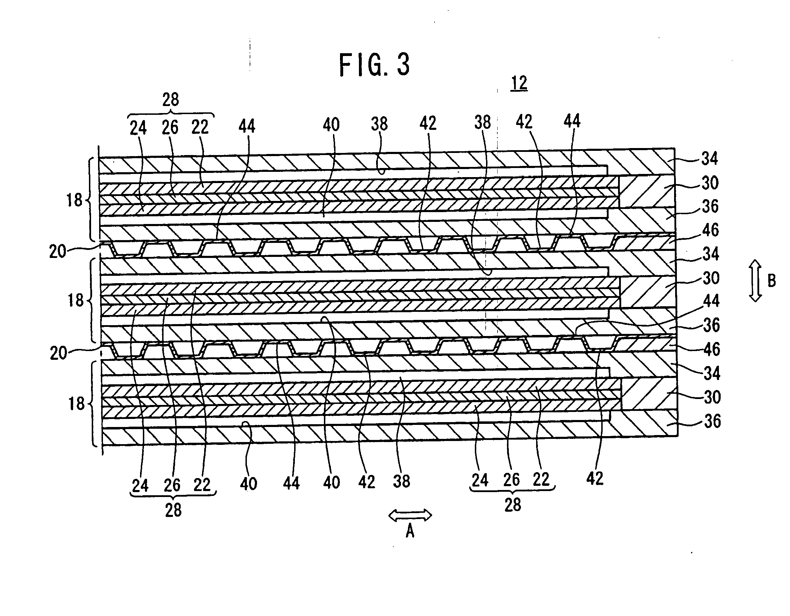

As shown in FIG. 2, the stack 12 includes unit power generation cells 18 and cooling plates 20 provided adjacent to the unit power generation cells 18. As shown in FIG. 3, each of the unit power generation cells 18 includes an electrolyte electrode assembly (hereinafter also referred to as the "MEA") 28. The electrolyte electrode assembly 28 includes an anode electrode 22, a cathode electrode 24, and a solid polymer electrolyte membrane 26 interposed between the anode electrode 22 and the cathode electrode 24. The solid polymer electrolyte membrane 26 is made of perfluorosulfonic acid polymer. The MEA 28 is held in an opening 32 of a gasket 30 made of polytetrafluoroethylene (PTFE) resin.

The MEA 28 is sandwiched between a pair of separators 34, 36. The separator 34 in contact with the anode electrode 22 has a first gas flow field 38. Hydrogen as a fuel gas flows through the first gas flow field 38. The separator 36 in contact with the cathode electrode 24 has a second gas flow field 40. The air containing oxygen (oxygen-containing gas) flows through the second gas flow field 40.

Further, the cooling plate 20 includes first protrusions 42 protruding away from the separator 36 toward the separator 34 and second protrusions 44 protruding away from the separator 34 toward the separator 36 to form a continuous corrugated plate (see FIG. 3). That is, corrugations are arranged from one side to the other side of the stack 12, i.e., in a direction indicated by an arrow A in FIG. 2. Thus, as shown in FIG. 3, except the opposite ends, the cooling plate 20 contacts the separator 34 at only respective tops of the first protrusions 42, and contacts the separator 36 at only respective tops of the second protrusions 44. In the structure, spaces are formed between the first protrusions 42 and the separator 36, and between the second protrusions 44 and the separator 34, respectively.

A spacer 46 is interposed between the end of the cooling plate 20 and the separator 34 or the separator 36 for preventing leakage of the air or the hydrogen.

In the structure, in FIG. 2, a first gas discharge passage 50 for discharging the hydrogen, a second gas discharge passage 48 for discharging the air, a first gas supply passage 52 for supplying the hydrogen, and a second gas supply passage 54 for supplying the air extend through a lower right corner, a lower left corner, an upper left corner, and an upper right corner, respectively, of the gaskets 30, the separators 34, 36, the cooling plates 20, and the spacers 46. It is a matter of course that the first gas supply passage 52 and the first gas discharge passage 50 are connected to the first gas flow field 38, and the second gas supply passage 54 and the second gas discharge passage 48 are connected to the second gas flow field 40.

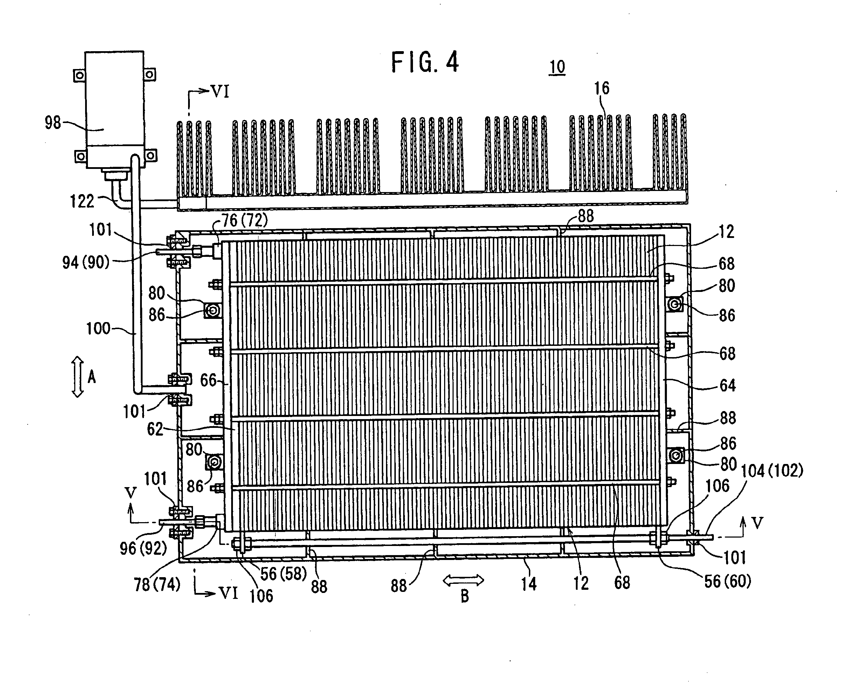

The unit power generation cells 18 and the cooling plates 20 are stacked alternately. Further, current collecting plates 58, 60 having tabs 56, insulating sheets (not shown), and end plates 62, 64 are provided at opposite ends. Further, a backup plate 66 is provided on the end plate 62. Components between the end plate 64 and the backup plate 66 are tightened together by tie rods 68 shown in FIG. 4 to form the stack 12. Further, recesses 70 are formed on upper and lower end surfaces of the stack 12 so as to prevent the stack 12 from structurally interfering with the tie rods 68.

The current collecting plate 60 is electrically connected to the anode electrodes 22 of the unit power generation cells 18. The current collecting plate 58 is electrically connected to the cathode electrodes 24 of the unit power generation cells 18.

In the structure, in FIG. 2, the end plate 62 has a first gas discharge port 74 as an outlet port for the hydrogen at a lower right corner, a second gas discharge port 72 as an outlet port for the air at a lower left corner, a first gas supply port 76 as an inlet port for the hydrogen at an upper left corner, and a second gas supply port 78 as a supply port for the air at an upper right corner. The first gas discharge port 74 is connected to the first gas discharge passage 50. The second gas discharge port 72 is connected to the second gas discharge passage 48. The first gas supply port 76 is connected to the first gas supply passage 52. The second gas supply port 78 is connected to the second gas supply passage 54. Further, two stays 80 are formed under the end plates 62, 64, protruding in the stacking direction of the unit power generation cells 18 indicated by an arrow B in FIG. 2.

The backup plate 66 is shaped in a manner such that it does not close the first gas discharge port 74, the second gas discharge port 72, the first gas supply port 76, and the second gas supply port 78 of the end plate 62.

As shown in FIG. 1, the stack container case 14 has a rectangular parallelepiped shape. The stack container case 14 has an opening on the upper side. Rubber support spacers 82 are provided on the bottom of the stack container case 14 at four positions. Further, bolt holes (not shown) are provided on the bottom of the stack container case 14, and bolts 86 extending through the stays 80 at the end plates 62, 64 are screwed into the bolt holes.

After the stack 12 is placed on the rubber support spacers 82, the bolts 86 are screwed into the bolt holes to fixedly position the stack 12. As a result, the bottom surface of the stack 12 is spaced away from the stack container case 14 by the thickness of the stay 80 and the thickness of the rubber support spacer 82. Thus, a space is formed between the bottom surface of the stack 12 and the stack container case 14. As described above, since the insulating sheets are interposed between the current collecting plates 58, 60 and the end plates 62, 64, no short circuit occurs between the end plates 62, 64 and the stack container case 14.

Further, plate members 88 are vertically provided on the inner wall surface of the stack container case 14. The plate members 88 protrude toward the side surfaces of the stack 12. In the structure, the stack 12 is surrounded by the front ends of the plate members 88, and positioned substantially at the center of the stack container case 14.

As shown in FIG. 1, five through holes are formed on one side surface of the stack container case 14. A first gas discharge pipe 92, a second gas discharge pipe 90, a first gas supply pipe 94, and a second gas supply pipe 96 pass through the through holes at the four corners. The first gas discharge pipe 92 is connected to the first gas discharge port 74. The second gas discharge pipe 90 is connected to the second gas discharge port 72. The first gas supply pipe 94 is connected to the first gas supply port 76. The second gas supply pipe 96 is connected to the second gas supply port 78. Further, an outlet pipe 100 extending from a coolant circulation pump 98 as described later passes through the through hole formed substantially at the center of the one side surface of the stack container case 14. It is a matter of course that rubber packing members 101 are provided between all of the pipes 90, 92, 94, 96, 100 and all of the through holes for preventing leakage of the coolant stored in the stack container case 14.

It is preferable that insulating coating of PTFE or the like is applied to the outer circumferential wall surfaces of the first gas discharge pipe 92, the second gas discharge pipe 90, the first gas supply pipe 94, and the second gas supply pipe 96. In the structure, even if metal particles or the like are mixed into the coolant stored in the stack container case 14 to cause the coolant to have electrical conductivity, shorting between the coolant and the pipes can be avoided.

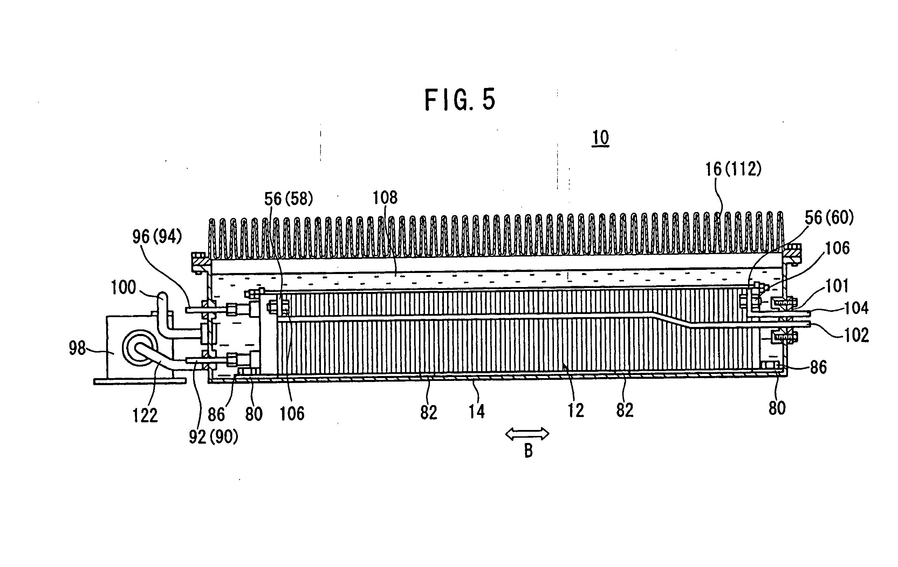

As shown in FIG. 5, two elongated through holes are formed on a side surface opposite to the one side surface, and terminal cables 102, 104 extend through the through holes. The terminal cables 102, 104 are connected to the tabs 56 of the current collecting plates 58, 60 with the bolts 106. In the same manner as described above, rubber packing members 101 are interposed between the terminal cables 102, 104 and the through holes to prevent leakage of the coolant, and to prevent electrical conduction from the terminal cables 102, 104 to the stack container case 14.

In the structure, insulating coating of PTFE is applied to the inner surface of the stack container case 14 and the plate members 88.

An insulating organic solvent 108 as the coolant is stored in the stack container case 14. Stated otherwise, the stack 12 is immersed in the organic solvent 108 inside the stack container case 14.

In this case, as the organic solvent 108, a liquid having a boiling temperature lower than the operating temperature of the stack 12 is selected. Specifically, lower alcohols such as methanol and ethanol, or solvents of fluorine compound such as perfluorocarbon and alternatives to CFC (chlorofluorocarbon) can be used.

It is preferable that the organic solvent 108 is a liquid which can be boiled in the nucleate boiling state, i.e., in the state where boiling occurs by developing vapor bubbles around the nucleation center. In the case of using a liquid which can be boiled in so called the film boiling state, the entire stack 12 is covered by the vapor film, and the contact surface between the stack 12 and the organic solvent 108 is reduced. Therefore, the efficiency of cooling the stack 12 may be lowered undesirably.

In order to ensure that boiling occurs in the nucleate boiling state, as the organic solvent 108, it is preferable to select a liquid having the boiling temperature lower than the operating temperature of the stack 12 by 10°C to 25°C. In the case of using a liquid where the value calculated by subtracting the boiling temperature from the operating temperature of the stack 12 is less than 10°C, nucleate boiling does not occur easily. Further, in the case of using a liquid where the value calculated by subtracting the boiling temperature from the operating temperature of the stack 12 is greater than 25°C, it is likely that film boiling occurs. Therefore, as the organic solvent 108, it is more preferable to select a liquid where the value calculated by subtracting the boiling temperature from the operating temperature of the stack 12 is in the range of 11°C to 23°C.

For example, in the case where the operating temperature of the stack 12 is 80°C, Novec HFE-7100 manufactured by Sumitomo 3M Ltd. (composition formula: C₄F₉OCH₃, boiling temperature: 61°C) can be used suitably. In the case where the operating temperature of the stack 12 is 90°C, Novec HFE-7200 manufactured by Sumitomo 3M Ltd. (composition formula: C₄F₉OC₂H₅, boiling temperature: 76°C) can be used suitably.

As described above, the condenser 16 is fixedly positioned, with bolts 110, in the opening of the stack container case 14 at the upper position (see FIG. 1). The condenser 16 includes a fin section 112, a guide section 116 protruding from one end of the fin section 112, and a trapping section 118 provided at a lower end of the guide section 116. The fin section 112 includes fins extending in the direction indicated by the arrow A in FIG. 1. The guide section 116 includes guide fins 114 in the vertical direction. PTFE coating is applied to at least the fin section 112 and the guide section 116.

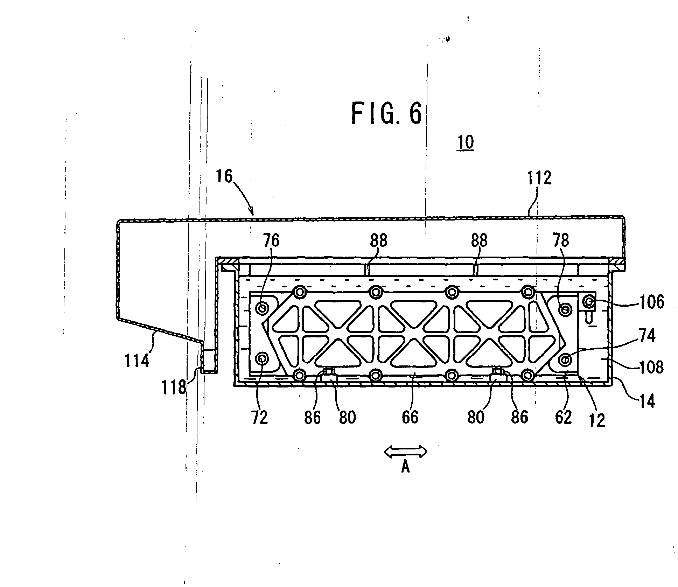

As shown in FIG. 6, the fins of the fin section 112 slightly get higher in the direction away from the guide section 116. Stated otherwise, the fins are slightly inclined downwardly from the end connected to the end of the stack container case 14 at the first gas supply port 76 and the second gas supply port 78 toward the guide section 116. Further, a drain window 120 provided on one end surface of the trapping section 118 is connected to an inlet pipe 122 extending to the coolant circulation pump 98 (see FIG. 1).

The coolant circulation pump 98 is part of a circulation mechanism. By operation of the coolant circulation mechanism, after the organic solvent 108 is vaporized by cooling the stack 12, and condensed by the condenser 16, the organic solvent 108 flows back to the stack container case 14. As described above, the outlet pipe 100 from the coolant circulation pump 98 passes through the through hole formed in one end surface of the stack container case 14.

It is preferable that lining treatment is applied to the inner walls of the inlet pipe 122 and the outlet pipe 100 in advance. Further, for the reason stated above, it is preferable that insulating coating is applied to at least the outer circumferential wall of the outlet pipe 100.

Basically, the polymer electrolyte fuel cell 10 according to the present embodiment has the above structure. Next, operation and advantages of the polymer electrolyte fuel cell 10 and a method of cooling the stack 12 will be described.

Firstly, in fabricating the polymer electrolyte fuel cell 10, the stack 12 is placed on the rubber support spacers 82 provided on the bottom surface of the stack container case 14. Using the bolts 86, the stays 80 of the end plates 62, 64 are connected to the bottom surface of the stack container case 14 (see FIGS. 4 to 6). Thus, the stack 12 in the stack container case 14 is fixedly positioned.

Then, the second gas discharge pipe 90, the first gas discharge pipe 92, the first gas supply pipe 94, the second gas supply pipe 96, and the outlet pipe 100 are inserted into the through holes formed in one end surface of the stack container case 14 (see FIG. 1), and the respective pipes 90, 92, 94, 96, 100 are connected to the second gas discharge port 72, the first gas discharge port 74, the first gas supply port 76, the second gas supply port 78, and the coolant circulation pump 98. The terminal cables 102, 104 are inserted into the through holes formed in the end surface opposite to the one end surface. The terminal cables 102, 104 are connected to the tabs 56 of the current collecting plates 58, 60, respectively.

Next, the insulating organic solvent 108 such as Novec HFE-7100 or Novec-7200 is stored in the stack container case 14. At this time, since PTFE coating is applied to the inner wall surface of the stack container case 14 and the plate members 88, it is possible to prevent metal particles from being mixed into the organic solvent 108 from the stack container case 14 or the plate members 88.

As described above, the stack 12 includes the cooling plates 20. Spaces are formed between the first protrusions 42 of the cooling plate 20 and the separator 36, and between the second protrusions 44 and the separator 34 (see FIG. 3). Therefore, when the organic solvent 108 is stored in the stack container case 14, the organic solvent 108 flows into the stack 12.

In determining the amount of the organic solvent 108, it is sufficient that the liquid surface of the organic solvent 108 becomes higher than the upper end surface of the stack 12 (see FIGS. 5 and 6).

Next, using the bolts 110, the condenser 16 is fixedly positioned in the opening of the stack container case 14 at the upper position (see FIG. 1). The inlet pipe 122 is provided to extend from the trapping section 118 of the condenser 16 to the coolant circulation pump 98 to form the polymer electrolyte fuel cell 10.

As described above, in the embodiment of the present invention, it is not necessary to provide any coolant flow field for the coolant in the stack 12. Therefore, it is not necessary to provide insulating coating for the coolant flow field. As a result, the stack 12 can be fabricated very easily.

Further, since it is not necessary to provide pipes or a coolant supply source for supplying the coolant, the structure of the polymer electrolyte fuel cell 10 is simplified. Thus, the space for providing the polymer electrolyte fuel cell 10 can be reduced, and the weight of the polymer electrolyte fuel cell 10 can also be reduced.

In operating the polymer electrolyte fuel cell 10, the hydrogen is supplied from a hydrogen supply source (not shown) such as a hydrogen gas cylinder to the first gas supply pipe 94, and the air is supplied from an air supply source (not shown) such as a compressor to the second gas supply pipe 96. The hydrogen is supplied to the anode electrode 22 through the first gas supply port 76 and the first gas flow field 38. The air is supplied to the cathode electrode 24 through the second gas supply port 78 and the second gas flow field 40. At the anode electrode 22, ionization reaction of the hydrogen is induced, and electrons generated in the reaction are collected from the current collecting plate 60, and used outside the fuel cell 10 as electrical energy for energizing the load electrically connected to the terminal cables 102, 104.

Protons move through the solid polymer electrolyte membrane 26 to the cathode electrode 24. At the cathode electrode 24, the protons react with oxygen in the air supplied to the cathode electrode 24 and the electrons which have reached the cathode electrode 24 through the terminal cable 104, to produce water.

The unreacted hydrogen from the first gas flow field 38 is discharged from the first gas discharge pipe 92 through the first gas discharge port 74. Further, water produced at the cathode electrode 24, the unreacted oxygen, and nitrogen in the air from the second gas flow field 40 are discharged from the second gas discharge pipe 90 through the second gas discharge port 72.

The rubber support spacers 82 supporting the stack 12 are insulators, space is provided between the stack 12 and the stack container case 14, and the insulating organic solvent 108 is present in the space. Further, insulating coating of PTFE is applied to the inner wall surface of the stack container case 14. Thus, when the power generation is carried out, no leakage of electricity to the liquid or ground occurs.

In the cell reaction, the temperature of the stack 12 is increased to 80°C to 90°C. As described above, since the boiling temperature of the organic solvent 108 is lower than the operating temperature of the stack 12, boiling of the organic solvent 108 occurs, and the organic solvent 108 is vaporized. By the latent heat, the amount of heat is removed from the stack 12 to cool the stack 12.

At the time of boiling, in the case of using a liquid which can be boiled in the nucleate boiling state, vapor bubbles are developed continuously on the outer surface of the stack 12. The vapor bubbles move away from the stack 12 swiftly, and move rapidly and upwardly in the organic solvent 108. In this case, the outer surface of the stack 12 is not covered by the vapor bubbles. Therefore, the stack 12 can be cooled even more efficiently.

In the embodiment, the organic solvent 108 flows in the stack 12. Therefore, the amount of heat in the stack 12 is removed swiftly, and the stack can be cooled very efficiently.

The vaporized organic solvent 108 moves upwardly from the liquid surface as vapor, and moves to the fin section 112 of the condenser 16 cooled by the outside air. Therefore, the vapor is condensed into liquid droplets by cooling by the fins of the fin section 112.

The liquid droplets are partially dropped onto the stack container case 14 from the fin section 112. Further, since the fins are inclined downwardly toward the guide section 116, the liquid droplets which have not been dropped flow toward the guide section 116 along the fins. After the liquid droplets reach the guide section 116, the liquid droplets flow along the guide fins 114. Then, the liquid droplets are trapped in the trapping section 118. The coolant circulation pump 98 returns the liquid droplets to the stack container case 14 through the inlet pipe 122 and the outlet pipe 100. Further, after the vapor of the liquid solvent 108 which has reached the guide section 116 without condensation in the fin section 112 is condensed by the guide fins 114, the vapor of the liquid solvent 108 returns to the stack container case 14 by the same route as mentioned above.

In the structure, since PTFE coating is applied to the fin section 112 of the condenser 16 and the guide section 116, metal particles from the fins or the guide fins 114 are not mixed into the liquid droplets.

Further, even if metal particles are mixed into the organic solvent 108, by forming the insulating coating on the outer wall surfaces of the second gas discharge pipe 90, the first gas discharge pipe 92, the first gas supply pipe 94, the second gas supply pipe 96, and the outlet pipe 100, leakage of electricity to the liquid can be avoided.

That is, in the embodiment of the present invention, reduction in the space for providing the polymer electrolyte fuel cell 10 is achieved, and the polymer electrolyte fuel cell 10 can be cooled efficiently. Further, it is possible to avoid leakage to the liquid or ground reliably.

The polymer electrolyte fuel cell 10 with the above-mentioned structure may be mounted on a vehicle, for example. In driving the vehicle, if the vehicle body is tilted while the vehicle is running along a curve, or running on a bumpy road surface, the organic solvent 108 stored in the stack container case 14 is dammed by the plate members 88. Thus, it is possible to prevent the stack 12 from being exposed from the organic solvent 108, and the stack 12 can be cooled reliably.

In the embodiment as descried above, the stack container case 14 is made of metal. Alternatively, the stack container case 14 may be made of resin.

Further, in particular, it is not necessary to provide the circulation mechanism such as the coolant circulation pump 98. In this case, the organic solvent 108 is condensed by the fins of the condenser into the liquid droplets, and the liquid droplets are dropped onto the stack container case 14. In one embodiment, only in this manner, the organic solvent 108 vaporized by cooling the stack 12 is returned to the stack container case 14.

## Claims

1. A polymer electrolyte fuel cell (10) including a stack (12) formed by stacking a plurality of unit power generation cells (18), said unit power generation cells (18) each including an electrolyte electrode assembly (28) and a first separator (34) and a second separator (36) sandwiching said electrolyte electrode assembly (28), said electrolyte electrode assembly (28) including an anode electrode (22), a cathode electrode (24), and a solid polymer electrolyte (26) interposed between said anode electrode (22) and said cathode electrode (24),**characterised in that** said polymer electrolyte fuel cell (10) further comprises:
a stack container case (14) containing said stack (12); and
a condenser (16) provided in said stack container case (14),
wherein said stack (12) is immersed in an electrically insulating liquid coolant (108) inside said stack container case (14) to cool said stack (12);
wherein said condenser (16) condenses the liquid coolant (108) which has been vaporized at said stack container case (14) by cooling said stack (12); and
wherein a plurality of vertically extended plate members (88) for damming the liquid coolant (108) inside the stack container case (14) are provided on an inner wall surface of said stack container case (14), said plate members (88) protruding toward side surfaces of said stack (12) and being exposed above the liquid surface of the liquid coolant (108).

2. A polymer electrolyte fuel cell (10) according to claim 1, wherein coating is applied to at least one of a surface of said condenser (16) and an inner surface of said stack container case (14).

3. A polymer electrolyte fuel cell (10) according to claim 2, wherein the coating comprises fluorine resin.

4. A polymer electrolyte fuel cell (10) according to claim 3, wherein the coating comprises polytetrafluoroethylene.

5. A polymer electrolyte fuel cell (10) according to any of claims 1 to 4, wherein said stack (12) includes a cooling plate (20) having at least one groove (42, 44) for supplying the liquid coolant (108) into said stack (12).

6. A polymer electrolyte fuel cell (10) according to any one of claims 1 to 5, further comprising a trapping section (118) for trapping the condensed liquid coolant (108) at said condenser (16), and a circulation mechanism for allowing the liquid coolant (108) to flow from said trapping section (118) back to said stack container case (14).

## Patentansprüche

1. Polymerelektrolytbrennstoffzelle (10), einen Stapel (12) beinhaltend, der durch Stapeln mehrerer Block-Energieerzeugungszellen (18) gebildet ist, wobei die Block-Energieerzeugungszellen (18) jeweils eine Elektrolytelektrodenanordnung (28) sowie einen ersten Separator (34) und einen zweiten Separator (36) beinhalten, welche die Elektrolytelektrodenanordnung (28) zwischen sich einschließen, wobei die Elektrolytelektrodenanordnung (28) eine Anodenelektrode (22), eine Kathodenelektrode (24) und einen Festpolymerelektrolyten (26) beinhaltet, der zwischen der Anodenelektrode (22) und der Kathodenelektrode (24) eingesetzt ist, **dadurch gekennzeichnet, dass** die Polymerelektrolytbrennstoffzelle (10) ferner Folgendes umfasst:
ein Stapelbehältergehäuse (14), das den Stapel (12) enthält; und
einen Kondensator (16), der in dem Stapelbehältergehäuse (14) bereitgestellt ist,
wobei der Stapel (12) in ein elektrisch isolierendes, flüssiges Kühlmittel (108) im Inneren des Stapelbehältergehäuses (14) getaucht ist, um den Stapel (12) zu kühlen;
wobei der Kondensator (16) das flüssige Kühlmittel (108), das verdampft wurde, durch Kühlen des Stapels (12) am Stapelbehältergehäuse (14) kondensiert; und
wobei an einer Innenwandfläche des Stapelbehältergehäuses (14) mehrere sich vertikal erstreckende Plattenelemente (88) zum Eindämmen des flüssigen Kühlmittels (108) im Inneren des Stapelbehältergehäuses (14) bereitgestellt sind, wobei die Plattenelemente (88) hin zu Seitenflächen des Stapels (12) hervorstehen und über der Flüssigkeitsoberfläche des flüssigen Kühlmittels (108) freiliegen.

2. Polymerelektrolytbrennstoffzelle (10) nach Anspruch 1, wobei die Beschichtung auf einer Oberfläche des Kondensators (16) und/oder einer Innenfläche des Stapelbehältergehäuses (14) aufgebracht ist.

3. Polymerelektrolytbrennstoffzelle (10) nach Anspruch 2, wobei die Beschichtung Fluorharz umfasst.

4. Polymerelektrolytbrennstoffzelle (10) nach Anspruch 3, wobei die Beschichtung Polytetrafluorethylen umfasst.

5. Polymerelektrolytbrennstoffzelle (10) nach einem der Ansprüche 1 bis 4, wobei der Stapel (12) eine Kühlplatte (20) beinhaltet, die mindestens eine Rille (42, 44) aufweist, um das flüssige Kühlmittel (108) in den Stapel (12) zu führen.

6. Polymerelektrolytbrennstoffzelle (10) nach einem der Ansprüche 1 bis 5, ferner einen Fangabschnitt (118) umfassend, um das kondensierte flüssige Kühlmittel (108) am Kondensator (16) aufzufangen, und einen Zirkulationsmechanismus, um das Zurückströmen des flüssigen Kühlmittels (108) vom Fangabschnitt (118) zum Stapelbehältergehäuse (14) zu ermöglichen.

## Revendications

1. Pile à combustible à électrolyte polymère (10) comprenant un empilement (12) formé en empilant une pluralité de piles génératrices d'énergie unitaires (18), lesdites piles génératrices d'énergie unitaires (18) comprenant chacune un ensemble d'électrodes et d'électrolyte (28) et un premier séparateur (34) et un second séparateur (36) prenant en sandwich ledit ensemble d'électrodes et d'électrolyte (28), ledit ensemble d'électrodes et d'électrolyte (28) comprenant une électrode anodique (22), une électrode cathodique (24) et un électrolyte polymère solide (26) intercalé entre ladite électrode anodique (22) et ladite électrode cathodique (24), **caractérisée en ce que** ladite pile à combustible à électrolyte polymère (10) comprend en outre :
un boîtier récepteur d'empilement(14) contenant ledit empilement (12) ; et
un condenseur (16) prévu dans ledit boîtier récepteur d'empilement (14),
dans laquelle ledit empilement (12) est immergé dans un réfrigérant liquide (108) isolant de l'électricité à l'intérieur dudit boîtier récepteur d'empilement (14) pour refroidir ledit empilement (12) ;
dans laquelle ledit condenseur (16) condense le réfrigérant liquide (108) qui a été vaporisé sur ledit boîtier récepteur d'empilement (14) en refroidissant ledit empilement (12) ; et
dans laquelle une pluralité d'éléments de plaque (88) allongés verticalement pour retenir le réfrigérant liquide (108) à l'intérieur dudit boîtier récepteur d'empilement (14) sont prévus sur une surface de paroi interne dudit boîtier récepteur d'empilement (14), lesdits éléments de plaque (88) faisant saillie vers les surfaces latérales dudit empilement (12) et étant exposés au-dessus de la surface du réfrigérant liquide (108).

2. Pile à combustible à électrolyte polymère (10) selon la revendication 1, dans laquelle un revêtement est appliqué à au moins une d'une surface dudit condenseur (16) et d'une surface interne dudit boîtier récepteur d'empilement (14).

3. Pile à combustible à électrolyte polymère (10) selon la revendication 2, dans laquelle le revêtement comprend une résine fluorée.

4. Pile à combustible à électrolyte polymère (10) selon la revendication 3, dans laquelle le revêtement comprend du polytétrafluoréthylène.

5. Pile à combustible à électrolyte polymère (10) selon l'une quelconque des revendications 1 à 4, dans laquelle ledit empilement (12) comprend une plaque de refroidissement (20) ayant au moins une rainure (42, 44) pour acheminer ledit réfrigérant liquide (108) audit empilement (12).

6. Pile à combustible à électrolyte polymère (10) selon l'une quelconque des revendications 1 à 5, comprenant par ailleurs une section de piégeage (118) pour piéger le réfrigérant liquide condensé (108) dans ledit condenseur (16) et un mécanisme de circulation pour permettre au réfrigérant liquide (108) de s'écouler de ladite section de piégeage de nouveau vers ledit boîtier récepteur d'empilement (14).
